# EUROPÄISCHE PATENTSCHRIFT

(11) **EP 1 183 692 B1**
(45) Veröffentlichungstag und Bekanntmachung des Hinweises auf die Patenterteilung: **05.01.2005**
(21) Anmeldenummer: 00938689.7
(22) Anmeldetag: 26.05.2000
(51) Int. Cl.: G21C 17/07

(54) **VERFAHREN UND VORRICHTUNG ZUM PRÜFEN VON KERNREAKTOR-BRENNELEMENTEN**
METHOD AND DEVICE FOR EXAMINING THE FUEL ELEMENTS OF A NUCLEAR REACTOR
PROCEDE ET DISPOSITIF D'ANALYSE D'ELEMENTS COMBUSTIBLES D'UN REACTEUR NUCLEAIRE

(30) Priorität: 26.05.1999 DE 19924066; 15.05.2000 WO PCT/EP00/04352
(43) Veröffentlichungstag der Anmeldung: 06.03.2002
(73) Patentinhaber: Framatome ANP GmbH, 91058 Erlangen (DE)
(72) Erfinder: KNECHT, Klaus, D-91058 Erlangen (DE); STARK, Richard, D-91090 Effeltrich (DE)
(74) Vertreter: Mörtel & Höfner
(86) Internationale Anmeldenummer: PCT/EP2000/004830
(87) Internationale Veröffentlichungsnummer: WO 2000/074071

(56) Entgegenhaltungen:
- DE-A- 2 818 782
- GB-A- 1 376 060
- JP-A- 58 082 192
- US-A- 4 318 777
- US-A- 4 416 847

## Beschreibung

Die Erfindung betrifft ein Verfahren und eine Vorrichtung zum Prüfen mehrerer Brennelemente eines Kernreaktors, insbesondere eines Siedewasserreaktors auf Dichtheit ihrer Brennstäbe, während die Brennelemente unter Wasser auf einer Arbeitsunterlage ruhen, insbesondere sich noch innerhalb des Kernverbandes im Reaktordruckbehälter befinden. Dabei werden die Brennstäbe aufgeheizt, um radioaktive Spaltprodukte aus defekten Brennstäben auszutreiben, und in Proben, die aus der Umgebung der Brennelemente abgesaugt werden, wird die Radioaktivität von ausgetriebenen Spaltprodukten erfaßt. Die entsprechende Vorrichtung enthält eine Haube, deren Öffnung nach unten weist und mindestens über einem der ruhenden Brennelemente positionierbar ist; von der Haube führt mindestens eine Ansaughaube mit einer Ansaugeinrichtung heraus, und um die Radioaktivität der angesaugten Spaltprodukte zu analysieren, ist eine Detektoreinrichtung vorhanden.

In Kernreaktoren müssen in regelmäßigen Abständen abgebrannte Brennstäbe durch frische ersetzt werden, die anschließend zusammen mit wiederverwendbaren Brennelementen neu über den Kern verteilt werden. Dabei werden in der Regel die alten Brennelemente von ihrer Arbeitsunterlage, also z.B. dem unteren Kerngitter im Reaktordruckbehälter, herausgehoben und zunächst auf einer anderen Arbeitsunterlage, z.B. einem Lagergestell in einem eigenen Wasserbecken, abgestellt um nachher wieder zurück zum Reaktordruckbehälter gebracht und auf die neue Position im Reaktorkern eingesetzt zu werden. Während des gesamten Vorgangs befinden sich die Brennelemente aus Strahlenschutzgründen unter Wasser, wobei sie zu ihrem Transport höhenverstellbar am Mast einer verfahrbaren Brennelement-Lademaschine gehalten sind.

Leichtwassergekühlte Reaktoren müssen dabei abgeschaltet sein, wobei derartige Betriebspausen aus Kostengründen möglichst kurz sein sollen.

Bestrahlte Brennelemente sind jedoch nur dann wiederverwendbar, wenn die Hüllrohre ihrer Brennstäbe keine Leckstellen aufweisen, durch die radioaktive Spaltprodukte, die durch die Kernspaltung während des vorangegangenen Reaktorbetriebes im Brennstoff entstanden sind, austreten und das Kühlwasser des Reaktors unzulässig kontaminieren könnten. Neben optischen Inspektionen der Brennelemente und Untersuchungen einzelner Brennstäbe mittels Ultraschall oder Wirbelstromsonden ist das sogenannte "Sipping" üblich, um die Brennelemente zu identifizieren, die einen Brennstab mit einer Leckstelle enthalten. Dabei wird zunächst ein Druckunterschied zwischen dem Binnendruck im Brennstab und dem Außendruck im umgebenden Wasser erzeugt, um die in der Brennstab-Füllung entstandenen Spaltprodukte in möglichst großen Mengen auszutreiben und dann Proben, die aus der Umgebung des Brennelements abgesaugt werden, zu analysieren. Bei der Analyse können Detektoren für radioaktive Strahlung verwendet werden. Solche Detektoren können z.B. auf gasförmige Spaltprodukte, wie Xenon 133 oder Krypton 85, in gasförmigen Proben oder auf wasserlösliche Spaltprodukte (z.B. Jod 131 oder Caesium 134) in Wasserproben besonders empfindlich sein.

Für die Prüfung der Dichtheit bestrahlter Brennelemente ist Nachweissicherheit und Schnelligkeit besonders wichtig.

Dazu wurde das "Mastsipping" entwickelt, bei dem die Leckstellensuche durchgeführt wird, während die Brennelemente am Mast der Lademaschine hängen und zwischen den beiden erwähnten Arbeitsunterlagen transportiert wird. Bei Druckwasser-Lademaschinen wird ein Brennelement zum seitlichen Schutz seiner Brennstäbe in eine Zentrierglocke gehoben, die dann in den Hohlmast der Lademaschine eingeführt wird. Da das Brennelement dabei mehrere Meter angehoben wird, sinkt der hydrostatische Druck im umgebenden Wasser gegenüber dem Binnendruck in den Brennstäben ab, wobei an Leckstellen von Brennstäben ein Druckausgleich stattfindet, der radioaktive Spaltprodukte aus dem defekten Brennstab austreibt. Es ist dann ein trockenes Sipping möglich, bei dem die austretenden Gasblasen sich an der Decke der Zentrierglocke sammeln und zusammen mit einem von unten in die Zentrierglocke eingeleiteten Spülgas, das das Kühlwasser verdrängt und auch an der Außenfläche der Brennstäbe adsorbierte, gasförmige Spaltprodukte mitnimmt, abgesaugt werden. Dabei kann das abgesaugte Gas in einer Detektoreinrichtung mit einer elektronischen Auswertung "on-line" analysiert werden d.h. die Radioaktivität der ausgetriebenen, gasförmigen Spaltprodukte wird bereits erfaßt, solange das Brennelement noch am Lademast hängt. Es kann auch auf das Einleiten und Absaugen des Spülgases verzichtet werden, wobei aus dem Kopf der Brennelemente nur Wasser abgesaugt wird, bis praktisch das gesamte, ursprünglich im Brennelement bzw. der Zentrierglocke vorhandene Kühlwasser ausgetauscht ist ("trockenes Sipping"). Bei diesem Austausch des Wassers können auch ursprünglich ausgetretene Gasbläschen aufgelöst oder jedenfalls vom Wasserstrom mitgenommen und zusammen mit gelösten Spaltprodukten durch Entgasung des abgesaugten Wassers in einer Entgasungseinrichtung wieder freigesetzt werden, um ihre Radioaktivität anschließend in einer Detektoreinrichtung zu erfassen.

Im Siedewasserreaktor ist der Mast der Lademaschine lediglich ein teleskopierbarer Arm mit einem unten vorstehenden Greifer, an dem das Brennelement außerhalb des Mastes gehalten ist. Auch in diesem Fall sind die angegebenen Mastsipping-Verfahren möglich, wenn der Greifer in einer nach unten offenen Haube angeordnet ist, die über den Kopf des Brennelements gestülpt ist. Siedewasser-Brennelemente besitzen nämlich einen die Brennstäbe seitlich umgebenden Brennelement-Kasten, der beim Sipping die Funktion der Zentrierglocke im Hohlmast der Lademaschine übernimmt. Je nach Größe des Kerns erfordert das Mastsipping 50 bis 120 Stunden. Obwohl das Brennelement möglichst während des Transports der Brennelemente geprüft werden soll, erfordert das Mastsipping zusätzlichen Zeitaufwand.

Als anderer Weg zur Zeitersparnis in Siedewasserreaktoren ist es auch üblich, mehrere Brennelemente simultan mittels einer Haube zu prüfen, die durch Seitenwände in einzelne Zellen zur Aufnahme der einzelnen Brennelemente unterteilt ist. Das simultane Prüfen der Brennelemente kann als trockenes Sipping erfolgen. Zwar entsteht dann nur ein geringer hydraulischer Druckunterschied zwischen der Ruheposition im Kern und der Position, in dem das Sipping vorgenommen wird, jedoch wird das Austreiben der Spaltgase dadurch verstärkt, daß in die über die Brennelement-Köpfe gestülpte Haube soviel Gas eingeleitet wird, daß jeweils der Kopf mit dem oberen Rand des Brennelement-Kastens in einem Gaspolster sitzt, das die Zirkulation von Kühlwasser an den Brennstäben praktisch unterbindet. Die Nachzerfallswärme des Brennstoffs heizt somit das Innenvolumen der Brennstäbe auf und erzeugt auf thermischem Wege einen Druckunterschied, der den hydraulischen Druckunterschied ausreichend verstärkt. Die durch Leckstellen austretenden und nach oben perlenden Gasbläschen vereinigen sich mit dem Gaspolster unter der Haube. Nach einer vorgegebenen Aufheizzeit kann das Gaspolster mit den gesammelten gasförmigen Spaltprodukten abgesaugt werden, um z.B. in einem Labor auf Anwesenheit typischer Spaltprodukte analysiert zu werden.

Dieses trockene Sipping kann auch vorgenommen werden, ohne die Brennelemente soweit aus dem Reaktorkern heben zu müssen, daß ihr unteres Ende zum Einleiten von Spülgas zugänglich würde oder ohne die Brennelemente überhaupt im Reaktorkern zu bewegen, also während sie auf ihrer üblichen Arbeitsunterlage (dem unteren Kerngitter im Reaktordruckbehälter oder einem Lagergestell) sitzen. Dadurch entfällt zwar die Zeit zum Anheben der Brennelemente und vor allem die Zeit zum zuverlässigen Ergreifen aller gleichzeitig zu prüfenden Brennelemente, jedoch muß - nahezu mit gleichem Zeitaufwand - die Saughaube in einer exakten Lage zur Arbeitsunterlage positioniert werden. Eine Zeitersparnis könnte sich ergeben, wenn viele Brennelemente gleichzeitig individuell (also durch jeweils eine eigene Einrichtung zum Aufheizen und Absaugen - also durch einen erheblichen apparativen Aufwand) geprüft werden können und nur wenig Umpositionierungen der Haube nötig sind. Jedoch sitzen im Siedewasser-Kern jeweils vier Brennelemente in einer quadratischen Masche des Kerngitters und die engen räumlichen Verhältnisse in einer Masche lassen es praktisch nicht zu, zwischen deren Brennelement-Kästen noch Seitenwände einzuführen, mit denen am Kopf jedes Brennelements ein eigenes Gaspolster zum Sammeln der aufsteigenden Spaltgase gebildet werden könnte. Außerdem ist erschwerend, daß die Brennelemente in der Regel durch die Reaktorstrahlung ein unterschiedliches Wachstum und Verbiegungen erleiden, der obere Rand der Brennelement-Kästen aber bis zum Gaspolster reichen muß, wenn Spaltprodukte aus einem Brennelement nicht ins Gaspolster eines anderen Brennelements gelangen und die Prüfung verfälschen sollen.

Daher käme das trockene Sipping, bei dem die Brennelemente auf ihrer Arbeitsunterlage ruhen, höchstens als eine Vorprüfung in Frage, bei der jeweils die vier Brennelemente einer Kerngitter-Masche gemeinsam auf Dichtheit aller Brennstäbe geprüft werden. Die aus einem der vier Brennelemente austretenden Spaltgase sind in dem gemeinsamen Gaspolster und den langen Ansaugleitungen dabei derart verdünnt, daß lange Meßzeiten, z.B. in einem Analyselabor für entnommene Gasproben, erforderlich sind. Ergibt sich dabei eine signifikante Erhöhung der Radioaktivität gegenüber der Umgebung, so müßte nachträglich die Dichtheit jedes Brennelements dieser Masche individuell auf andere Weise geprüft werden.

Dem Gedanken, bei einem Verfahren, bei dem die Brennelemente auf ihrer Arbeitsunterlage ruhen, nach dem Aufheizen statt Gasproben aus einem Gaspolster (also statt "trockenem Sipping") vielmehr Wasserproben aus den Brennelementen anzusaugen und anschließend zu entgasen, steht entgegen, daß während des Aufheizens gasförmige spaltgase in das Gaspolster entweichen und daher für eine Analyse der im abgesaugten Wasser gelösten Gase verloren gehen. Jedoch ist es möglich, die ins Wasser abgegebenen festen oder flüssigen Spaltprodukte nachzuweisen. Dazu können aus den Brennelementen individuell entnommene Wasserproben in einem Labor untersucht werden ("offline"). In 30 bis 50 Stunden können auf diese Weise alle Brennelemente eines Kerns geprüft werden.

Zur Erhöhung der Meßraten eines radioaktiven Gases, das nur in geringen Mengen anfällt, werden diese geringen Mengen häufig mit einem nicht-radioaktiven Trägergas gemischt und im Kreislauf mehrfach durch eine Anordnung von Detektoren geleitet. Dadurch wird die Radioaktivität mehrfach erfaßt, um eine statistisch signifikante Abweichung gegenüber der normalen Radioaktivität der Umgebung zu erhalten. Eine solche statistische Signifikanz ist beim Detektieren von Spaltprodukten aus defekten Brennstäben besonders wichtig, wenn die Brennelemente mit den Brennstäben bereits im Wasserbecken eines Kernreaktors untersucht werden, da dort ohnehin ein verhältnismäßig hoher Untergrund an Radioaktivität vorliegt.

Der Erfindung liegt die Aufgabe zugrunde, die einzelnen Brennelemente eines Kernreaktors in möglichst kurzer Zeit und mit möglichst einfachen Mitteln auf Dichtheit ihrer Brennstäbe zu prüfen. Sie ist insbesondere für Siedewasserreaktoren entwickelt und wird für diese beschrieben, ist aber auch anwendbar für andere, von Brennelement-Kästen umgebenen Brennelemente oder für Brennelemente (z.B. von Druckwasserreaktoren), falls diese in einem isolierenden Behälter stehen, der das Kühlmittel im Brennelement an einem seitlichen Austritt hindert.

Diese Aufgabe wird durch ein Verfahren und eine Vorrichtung nach Anspruch 1 bzw. 12 gelöst. Vorteilhafte Ausgestaltungen sind in den Unteransprüchen 2 bis 11 bzw. 13 bis 20 angegeben.

Hierzu greift die Erfindung auf ein Verfahren zurück, bei dem die Brennelemente auf einer Arbeitsunterlage und unter Wasser ruhen, während ihre Brennstäbe auf Dichtheit geprüft werden; diese Brennelemente werden aufgeheizt, um radioaktive Spaltprodukte aus defekten Brennstäben auszutreiben, und die Prüfung erfolgt, indem in aus der Umgebung der Brennelemente abgesaugten Proben die Radioaktivität von ausgetriebenen Spaltprodukten erfaßt wird.

Die Brennelemente sitzen in Maschen des Kerngitters, das - bis auf einzelne Maschen am Rand - jeweils vier Brennelemente in einer Masche enthält. Diese regelmäßige Anordnung ermöglicht die Einteilung der Brennelemente in übersichtliche Gruppen, z.B. eine erste Gruppe (I) von Brennelementen (A, B, C, D), eine zweite Gruppe (II) und eventuell weitere Gruppen, die jeweils ein erstes Brennelement (A, A'), ein zweites Brennelement (B, B') und eventuell weitere Brennelemente enthalten. Die Brennelemente einer ersten Abteilung (X), die mindestens die erste und zweite Gruppe (I, II) enthält, sollen vollständig auf die Dichtheit ihrer Brennstäbe geprüft werden, bevor ein erstes Brennelement (A'') einer anderen Abteilung (Y) geprüft wird.

Zu dieser ersten Abteilung (X) gehören also mindestens "erste" Brennelemente (A, A') und "zweite" Brennelemente (B, B'). Die Brennelemente (A, B, C, D) der ersten Gruppe (I) werden gemäß dieser Ausführungsform gemeinsam aufgeheizt und dabei einer gemeinsamen simultanen Vorprüfung mittels jeweils einer Einrichtung zum Ansaugen, Entgasen und Erfassen der Radioaktivität unterworfen, d.h. die Dichtheit aller Brennelemente der ersten Gruppe (I) werden bei dieser Vorprüfung gemeinsam nach dem eingangs genannten Prinzip geprüft, wobei also die Brennelemente auf ihrer Arbeitsunterlage sitzen bleiben und bereits während des Aufheizens ein kontinuierliches Absaugen von Wasser, Entgasen und Erfassung der Radioaktivität stattfindet. Obwohl Wasser abgesaugt wird, werden also Spaltgase erfaßt, und die Prüfung erfolgt "on-line", d.h. die ersten Meßwerte für die Radioaktivität liegen bereits vor und werden ausgewertet, während noch abgesaugt und entgast wird.

Erhöht sich die Radioaktivität in dem Gas, das durch Absaugen von Wasser aus allen Brennelementen (A, B, C, D) der ersten Gruppe freigesetzt wird, praktisch nicht gegenüber dem ursprünglichen Meßpegel vor Beginn der Prüfung bzw. dem Pegel der Umgebung, so ist die Prüfung dieser Gruppe bereits abgeschlossen. Nur bei einer Gruppe, die bei der Vorprüfung bereits eine signifikant erhöhte Radioaktivität ergibt, werden die Brennelemente dieser Gruppe individuell simultan geprüft, wobei dann natürlich für jedes Brennelement dieser Gruppe eine Einrichtung zum Ansaugen, Entgasen und Erfassen der Radioaktivität erforderlich sind (falls die Gruppe II eine signifikant erhöhte Radioaktivität ergibt, werden also simultan mittels jeweils vier Einrichtungen zum Absaugen, Entgasen und Detektieren die Brennelemente A', B', C', D' individuell geprüft). Da die Endprüfung einer signifikanten Gruppe also bereits mehrere (vier) solcher Einrichtungen erfordert, werden dafür vorgesehene Einrichtungen bereits zur Vorprüfung verwendet, vorzugsweise zur simultanen Vorprüfung mehrerer Gruppen (im Beispiel können also die Gruppe I, II und noch zwei weitere Gruppen der Abteilung X simultan geprüft werden).

Allerdings kann dabei am Rand auch eine einzelne Gruppe übrig bleiben, die dann in einer Abwandlung des Verfahrens als eigene Abteilung betrachtet wird, und es treten möglicherweise auch Gruppen auf, die weniger Brennelemente als die anderen Gruppen (z.B. nur ein erstes Brennelement) haben. Die Erfindung gestattet aber, auch solche unvollständigen Abteilungen und/oder Gruppen mit der gleichen Apparatur zu prüfen.

Der Rand des Kerngitters kann nicht mehr in Gittermaschen aufgeteilt werden, die eine vollständige Gruppe (vier Brennelemente) bilden. Auch dann kann jedoch diese Vorrichtung und das erfindungsgemäße Verfahren angewendet werden. Dabei werden also die Brennelemente einer Abteilung (X), die neben einem ersten oder mehreren ersten Brennelementen (A, A') auch ein zweites Brennelement oder mehrere zweite Brennelemente (B, B') umfaßt, aufgeheizt und geprüft. Dazu werden mindestens die Brennelemente einer ersten Gruppe (I), die mindestens ein erstes Brennelement (A) und mindestens ein zweites Brennelement (B) dieser ersten Abteilung (X) enthält, in einem ersten Schritt gemeinsam aufgeheizt und die Brennelemente (A, B, ...) dieser ersten Gruppe (I) werden einer gemeinsamen Vorprüfung unterworfen, wobei während des Aufheizens Wasser aus jedem Brennelement kontinuierlich abgesaugt und in einer gemeinsamen Entgasungseinrichtung kontinuierlich entgast wird. Außerdem wird durch Erfassung der Radioaktivität der dabei im freigesetzten Gas enthaltenen gasförmigen Spaltprodukte die Dichtheit aller Brennelemente (A, B, ...) der ersten Gruppe (I) gemeinsam geprüft. Nur im Fall einer signifikanten Radioaktivität werden in einem zweiten Schritt die Brennelemente (A, B, ...) dieser ersten Gruppe (I) durch voneinander unabhängiges kontinuierliches Absaugen von Wasser, unabhängiges Entgasen und unabhängiges Erfassen der Radioaktivität, individuell geprüft.

Dabei werden die im ersten Schritt einer gemeinsamen Vorprüfung unterworfenen Brennelemente im zweiten Schritt simultan, d. h. gleichzeitig, aber unabhängig geprüft - also mittels jeweils einer eigenen Ansaugeinrichtung, Entgasungseinrichtung und Detektoreinrichtung für jedes Brennelement dieser Gruppe mit der signifikanten Radioaktivität.

Die Brennelemente befinden sich in einem Wasser, in dem auch gasförmige Spaltprodukte gelöst sein können, die sich bereits vor dem Aufheizen im Wasser befunden haben und aus anderen Brennelementen stammen können. Ein solcher radioaktiver "Hintergrund" kann die Aussagekraft der Messungen stören, denn aus dem abgesaugten Wasser werden dann nicht nur die beim Aufheizen aus den Brennelementen ausgetriebenen Spaltprodukte erfaßt, sondern beim Entgasen können auch Spaltprodukte dieses "Hintergrundes" freigesetzt werden. Gemäß der Erfindung ist es vorteilhaft, wenn ein Trägergas, das möglichst keine Radioaktivität aufweist oder dessen Radioaktivität zumindest bei allen Brennelementen, die nacheinander untersucht werden sollen, praktisch konstant ist (also z.B. angesaugte Umgebungsluft oder Stickstoff oder ein anderes Gas, das komprimiert in Druckflaschen bereitgehalten wird) durch das abgesaugte Wasser hindurchgeleitet wird. Das Trägergas bildet im Wasser Bläschen, die auch noch solche Restmengen der gelösten Spaltprodukte aufnehmen, die allein durch eine Druckminderung oder ähnliche Entgasungsmaßnahmen nicht freigesetzt werden. Das Wasser wird dann also praktisch vollständig entgast.

Die Radioaktivität der freigesetzten Gase kann in einem Detektor oder in einer Anordnung aus mehreren hintereinander geschalteten Detektoren erfaßt werden, wobei es aber vorteilhaft ist, diese freigesetzten Spaltprodukte nicht in einem Kreislauf mehrfach durch die Detektoreinrichtung zu leiten. Eine derartige Mehrfach-Detektion erhöht zwar die Zählraten, täuscht jedoch eine höhere Signifikanz vor, denn dadurch werden nicht nur die aus defekten Brennstäben ausgetriebenen Spaltprodukte, sondern auch die Spaltprodukte des Hintergrundes mehrfach erfaßt. Es ist dann schwierig, zu beurteilen, ob in diesem Kreislauf nur freigesetzte Spaltprodukte des Hintergrundes ständig nochmals gezählt werden und die Zählraten deshalb ansteigen, oder ob der Anstieg durch einen steigenden Austritt von Spaltprodukten aus aufgeheizten, defekten Brennstäben hervorgerufen ist. Vielmehr wird vorteilhaft das Gas, das beim Entgasen des Wassers entsteht, nur einmal durch die Detektoreinrichtung geleitet und anschließend in einen Abluftkanal geleitet oder auf andere Weise entsorgt.

Das Aufheizen der Brennelemente geschieht am einfachsten auf die eingangs erwähnte Weise unter Ausnutzung der Nachzerfallswärme der Brennelemente. Hierzu werden mindestens die Brennelemente (A, B, C, D) der ersten Gruppe (I) - vorteilhaft auch alle anderen Brennelemente (A', B', C', D') der ersten Abteilung (X) - unter einer gemeinsamen Haube gehalten, in der durch Einleitung von Gas ein Gaspolster über den Brennstäben erzeugt wird. Diese Haube wird erst dann von den Brennelementen abgehoben, wenn diese Brennelemente geprüft sind.

Vorteilhaft ist die einer gemeinsamen Haube durch Seitenwände in Zellen über den Brennelementen aufgeteilt. Die Aufteilung der Haube in Zellen entspricht am einfachsten der Aufteilung der Abteilung in Gruppen.

Zur Erzeugung des Gaspolsters in jeder Zelle wird bevorzugt Gas solange in die Zellen geleitet, bis Füllstandsprüfleitungen, die aus diesen Zellen herausführen, eine vorgegebene Höhe des Wasserspiegels anzeigen. Da nicht alle Brennelemente die gleiche Höhe haben (z.B. weil sie von unterschiedlichen Herstellern stammen oder weil sie in den vorangegangenen Betriebszyklen ein unterschiedliches Strahlungswachstum erlitten haben), aber im Interesse einer gegenseitigen Abdichtung der Brennelemente die Brennelement-Kästen möglichst bis zum Gaspolster reichen sollen, sind die Füllstandsprüfleitungen in den einzelnen Zellen entsprechend der für jede Zelle vorgegebenen Höhe des Wasserspiegels bevorzugt individuell höhenveratellbar. Dabei können die Füllstandsprüfleitungen gleichzeitig zur Entlüftung benutzt werden, d.h. es wird solange Gas eingeleitet, bis über die Füllstandsprüfleitungen Gas austritt.

Entsprechend enthält die Vorrichtung eine wenigstens über einem ersten Brennelement (A) positionierbare Haube, die sich mit einer nach unten weisenden Öffnung über den Kopf wenigstens dieses einen Brennelements (A) stülpen läßt, und eine Einrichtung zum Einleiten von Gas in die Haube sowie Einrichtungen zum Ansaugen einer Probe und zum Erfassen (Detektieren) der Radioaktivität eines Gases. Die Einrichtung zum Ansaugen einer Probe ist auf das kontinuierliche Absaugen von Wasser, unter dem in die Haube einleitbaren Gas, geeignet und bestimmt. Sie ist mit einer Einrichtung zum kontinuierlichen Entgasen des Wassers mit einer anschließenden Einrichtung zum Detektieren der Radioaktivität eines Gases verbunden, der das in der Entgasungseinrichtung freigesetzte Gas kontinuierlich zuführbar ist und die kontinuierlich die Radioaktivität von Gasen messen kann. Außerdem ist eine Steuereinrichtung vorgesehen, um die Einrichtungen zum Absaugen, Entgasen und Erfassen der Radioaktivität zu steuern.

Vorteilhaft ist die Einrichtung zum Erfassen der Radioaktivität eines Gases in einer Entsorgungsleitung angeordnet, die an die Entgasungseinrichtung angeschlossen ist. Über diese Entsorgungsleitung wird der Entgasungseinrichtung das dort kontinuierlich anfallende Gas kontinuierlich entnommen und anschließend entsorgt. Zumindest während des kontinuierlichen Absaugens des Wassers sind daher die Entgasungseinrichtung und die Einrichtung zum Erfassen der Radioaktivität eines Gases nur über diese Entsorgungsleitung miteinander verbunden. Dies schließt nicht aus, daß Entgasungseinrichtung und die Einrichtung zur Radioaktivitätserfassung vor dem Prüfen eines Brennelements gemeinsam an eine Anlage zum Entlüften und Spülen angeschlossen sind, jedoch sorgt wenigstens eine entsprechende Ablaufsteuerung dafür, daß während des Absaugens des Wassers keine Rückführung von abgesaugtem Gas aus der Einrichtung zur Radioaktivitätserfassung zurück in die Entgasungseinrichtung stattfinden kann. Die erwähnte Einrichtung zum Entlüften und Spülen ist auch vorteilhaft, um in die Entgasungaeinrichtung ein Trägergas in das abgesaugte Wasser einzuleiten, das dann in diesem abgesaugten Wasser Gasbläschen und Sammelstellen für gelöste gasförmige Spaltprodukte liefert. In dem Maß, in dem aus defekten Brennstäben gasförmige Spaltprodukte ausgetrieben werden, werden sie auch entgast und zusammen mit dem Trägergas in die Einrichtung zur Radioaktivitätserfassung transportiert und führen dort zu einem Anstieg, der bereits sehr frühzeitig eine Aussage über den Zustand der Brennstäbe zuläßt.

Diese Vorrichtung gestattet also bereits ein erfindungsgemäßes Verfahren, bei dem in einer ersten Abteilung (X) von Brennelementen, die mindestens ein erstes Brennelement (A) oder mehrere erste Brennelemente (A, A') umfaßt, mindestens ein erstes Brennelement (A) aufgeheizt und dadurch geprüft wird, daß bereits während des Aufheizens kontinuierlich Wasser als Probe abgesaugt wird. Dieses Wasser wird kontinuierlich entgast und im dabei freigesetzten Gas wird die Radioaktivität freigesetzter gasförmiger Spaltprodukte kontinuierlich erfaßt. Mit der Aufheizung und der Prüfung eines ersten Brennelements einer zweiten Abteilung (Y) Brennelemente - insbesondere dem versetzen einer Haube - wird erst begonnen, wenn dieses erste Brennelement (A) der ersten Abteilung (X) geprüft ist. Vorteilhaft wird mindestens das erste Brennelement (A) der ersten Abteilung (I) unter einer über mehrere oder alle Brennelemente (A, A', B, B' ...) der ersten Abteilung gestülpten Haube aufgeheizt, die eine den Kopf des oder der aufzuheizenden ersten Brennelemente umgebende Gasfüllung enthält.

Dadurch werden Bewegungen der Brennelemente vermieden; die Zahl der zeitaufwendigen Haubenbewegungen kann minimiert werden und es ist möglich, die Dichtheit aller Brennelemente einer Abteilung in einer gemeinsamen Aufheizung und Vorprüfung durchzuführen, an die sich nur gerade so viele Schritte zur individuellen Prüfung der Brennelemente anschließen müssen, wie die Zahl der als signifikant identifizierten Gruppen angibt. Im Fall von Abteilungen mit maximal vier Gruppen für jeweils vier Brennelemente sind im ungünstigen Fall, der praktisch nie auftritt (daß nämlich jede der vier Gruppen defekte Brennstäbe enthält), nur fünf Verfahrensschritte nötig.

Dies ist möglich, weil während des Aufheizens zunächst die Spaltprodukte aus der Nähe einer Leckstelle in einem Stab ausgetrieben werden und der Austritt der Spaltgase daher bereits mit dem Aufheizen beginnt, aber aus entlegeneren Stellen im Brennstab und insbesondere aus oberflächennahen Poren im Brennstab auch im fünften Schritt noch kontinuierlich Spaltgase austreten. Zwar nähert sich die Oberflächentemperatur der Brennstäbe asymptotisch einer Maximaltemperatur (z.B. 25° bis 40°K über der Temperatur des Reaktorwassers - entsprechend dem Bestrahlungszustand und der Nachzerfallswärme des Brennstoffs), jedoch reicht die ständig austretende und im Wasser des Brennelements sich sammelnde Spaltgasmenge auch noch im letzten Schritt zu einer eindeutigen Identifizierung defekter Brennelemente aus.

Die "on-line" Auswertung ermöglicht dabei, die Prüfung abzubrechen, sobald aussagekräftige Ergebnisse vorliegen. Dadurch verkürzt sich die Prüfzeit eines vollständigen Kerns, die bisher in der Regel bei 30 bis 120 Stunden liegt, auf weniger als 15 Stunden.
Zum Aufheizen genügt eine vorgegebene Temperaturdifferenz (z.B. 10°K oder weniger, wenn bereits vorher aussagekräftige Meßwerte vorliegen). Eine Temperaturüberwachung ist nicht nötig. Z.B. kann in der Regel ein Brennelement als intakt angesehen und die Prüfung abgeschlossen werden, wenn die on-line anfallenden Meßergebnisse nach einer Zeitspanne, die etwa einer Aufheizung um 10°K entspricht, noch keinerlei Anstieg der Radioaktivität zeigen. Nur stark streuende Meßwerte können es erforderlich machen, in längeren Zeiten abzuwarten, ob die Radioaktivität um einen vorgegebenen Mindestwert über den Grundpegel ansteigt. Spätestens nach einer Aufheizspanne, für die ein Wert zwischen 10 und 25° vorgegeben werden kann, ist eine solche Aussage zuverlässig.

Dabei kann die Auswertung der Meßergebnisse intellektuell oder automatisch erfolgen. Insbesondere kann das Aufheizen und Prüfen automatisch von einem Prüfprogramm gesteuert werden, das gestartet wird, sobald die Haube auf den Brennelementen positioniert ist, und z.B. Förderpumpen und Ventile in den Einrichtungen zum Absaugen und zum Detektieren schaltet.

Unter die genannte Haube wird bevorzugt solange Gas eingeleitet, bis eine aus der Haube herausführende Füllstandsprüfleitung eine vorgegebene Höhe des Wasserspiegels unter der Haube anzeigt. Im allgemeinen ist es vorteilhaft, wenn der obere Rand der Brennelement-Kästen bis zum Wasserspiegel unter der Haube reicht, denn dann ist das Innere ihres Brennelement-Kastens gegenüber Ansaugleitungen in anderen Brennelementen isoliert. Aus einem defekten Brennstab eines Brennelements austretende Spaltprodukte können also nicht in ein benachbartes Brennelement gelangen und dort die Ergebnisse verfälschen. Das Absaugen des Wassers erfolgt möglichst weit oberhalb der Endstopfen der Brennstäbe (vorteilhaft über der oberen Stabhalteplatte im Kopf jedes Brennelements), um auch Spaltprodukte zu erfassen, die dort aus undichten Schweißnähten austreten könnten. Dies erfordert eine Positionierung der Ansaugleitungen und des Wasserspiegels unter dem Gaspolster, die die individuelle Länge der Brennelemente berücksichtigt.

Bevorzugt werden alle Brennelemente der ersten Abteilung (X) unter einer über alle Brennelemente gestülpten gemeinsamen Haube aufgeheizt. Insbesondere kann die Haube durch Querwände in einzelne Zellen aufgeteilt sein, die jeweils eine eigene, höhenverstellbare Füllstandsprüfleitung aufweisen und über diese Füllstandeprüfleitung entlüftbar sind. Dadurch kann der Wasserspiegel unter dem Gaspolster, das über einer Gruppe von Brennelementen angeordnet ist, den Abmessungen der Brennelemente in verschiedenen Zellen angepaßt werden. Entsprechend wird zum Aufheizen Gas in alle die Zellen geleitet, die durch Querwände in der Haube gebildet sind und aus denen jeweils eine individuell höhenverstellbare Füllstandsprüfleitung nach außen führt; diese Einleitung von Gas wird dann beendet, wenn die Füllstandsprüfleitungen Gas enthalten. Dazu können Unterwasser-Fernsehkameras vorteilhaft sein, mit denen Gasbläschen erkannt werden, die aus den gasgefüllten Füllstandsprüfleitungen austreten und die Zellen entlüften, sobald der Wasserspiegel bis zur Öffnung der Füllstandsprüfleitungen absinkt.

vorteilhaft ist die Haube durch die Querwände in einzelne Zellen eingeteilt, die jeweils über dem Kopf einer Gruppe von Brennelementen positionierbar ist und die jeweils getrennt an eine Einrichtung zum Ansaugen und Entgasen anschließbar sind, wobei Ansauganschlüsse für jedes Brennelement vorgesehen sind. Dabei ist insbesondere für jedes Brennelement unter der Haube ein eigenes Absaugröhrchen vorgesehen, dessen eines Ende in einer vorgegebenen Lage unterhalb einer aus der Haube herausführenden Entlüftungsleitung (z.B. der Füllstandprüfleitung) am Kopf des Brennelemente (z.B. über den Brennstäben des Brennelements) positionierbar ist. Dadurch ist sichergestellt, daß der Wasserspiegel unter dem Gaspolster der Haube über dem Ansaugende der Ansaugleitung verbleibt und die Leitung daher Wasser und kein Gas fördert.

Die Haube wird bevorzugt erst dann mindestens über ein Brennelement einer anderen Abteilung gestülpt und dieses Brennelement (A, A', B, B' ...) der anderen Abteilung wird erst dann aufgeheizt, wenn die Dichtheit aller Brennelemente der ersten Abteilung (X) geprüft ist.

Die Zellen bzw. Gruppen erfassen jeweils die gleiche Anzahl von Brennelementen (im Beispiel also vier) und die Anzahl der Einrichtungen zum Ansaugen ist ebenfalls gleich dieser Anzahl, wobei mindestens einige dieser Ansaugeinrichtungen von den Ansaugleitungen einzelner Brennelemente einer Gruppe auf die Ansaugleitungen einzelner Brennelemente einer anderen Gruppe und auf die Vereinigung der Ansaugleitungen einer Gruppe umschaltbar sind. Dies ermöglicht, Ansaugeinrichtungen mit den daran angeschlossenen Entgasungseinrichtungen und Detektoreinrichtungen mehrfach zu benutzen, nämlich einerseits, um simultan mehrere Gruppen gleichzeitig der Vorprüfung zu unterwerfen, und dann, um simultan die einzelnen Brennelemente einer Gruppe mit signifikanter Radioaktivität der Endprüfung zu unterwerfen.

Daraus ergibt sich, daß es bei den üblichen Siedewasser-Reaktorkernen mit einem quadratischen Muster für die Anordnung der Brennelemente besonders vorteilhaft ist, wenn die Anzahl der Gruppen in der Abteilung gleich der Anzahl der einzelnen Brennelemente in einer Gruppe ist, wenn also vier Gruppen (I, II, III, IV) aus jeweils vier Brennelementen (A, B, C, D, A', B' ...) eine Abteilung, die unter der Haube geprüft wird, bilden.

Wie Siedewasser-Reaktoren im Sinn dieser Erfindung werden auch Reaktoren behandelt, deren Brennelemente einen hexagonalen Querschnitt haben, soweit sie (wie bei manchen Leichtwasser-Reaktoren osteuropäischer Bauart) von einem Kasten umgeben sind. In diesem Fall ist es vorteilhaft, die Abteilungen aus zwei Gruppen mit je drei Brennelementen oder aus drei Gruppen mit je zwei Brennelementen zu bilden. Dabei und bei den der Peripherie des Reaktorkerns auftretenden Abteilungen und Gruppen, bei denen nicht jede Brennelement-Position unter der Haube gesetzt werden kann, können nicht in jedem Schritt alle vorhandenen Einrichtungen benutzt werden, sondern werden stillgesetzt. Ebenso können an der Kernperipherie Ansaugleitungen oder Füllstandsleitungen an unbesetzten Positionen der Haube vorteilhaft abgesperrt werden.

Anhand von fünf Figuren wird ein vorteilhaftes Ausführungsbeispiel der Erfindung näher erläutert.

Es zeigen:
- FIG 1: einen Reaktordruckbehälter mit Reaktorkern und eine Brennelement-Lademaschine mit einer erfindungsgemäßen Vorrichtung,
- FIG 2: die oberen Enden von Brennelementen in zwei Maschen des Kerngitters sowie einen unter Wasser angeordneten Teil der erfindungsgemäßen Vorrichtung,
- FIG 3: den über dem Wasser angeordneten teil der Vorrichtung und die schematische Konfiguration beim Vorprüfen einer Abteilung von Brennelementen,
- FIG 4: die unveränderte Konfiguration für die Endprüfung einer Gruppe von Brennelementen mit signifikanter Radioaktivität, und
- FIG 5: eine Entgasungseinrichtung mit einer eine Detektoreinrichtung enthaltenden Entsorgungsleitung.

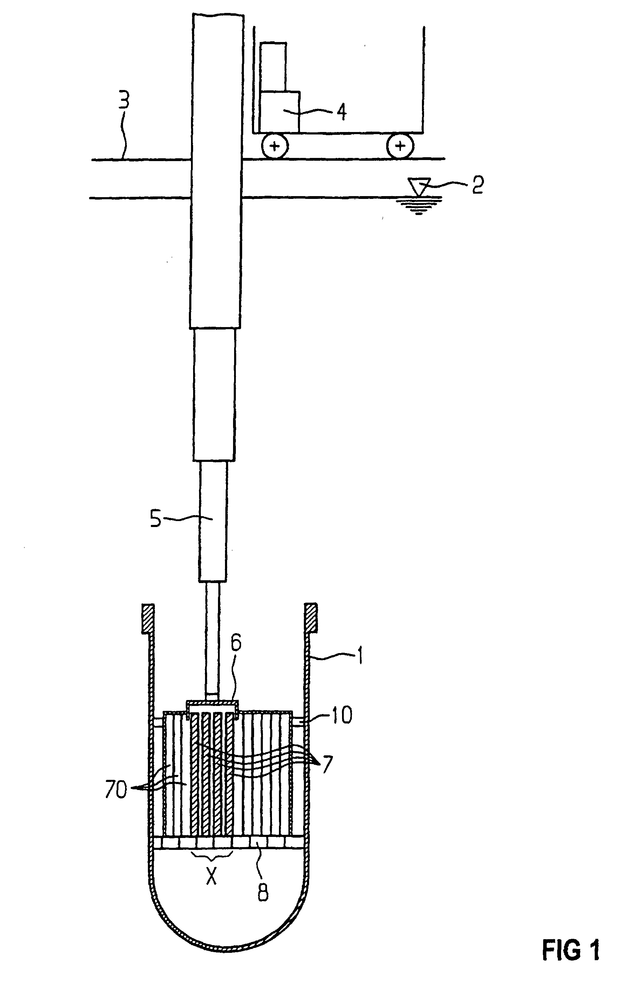

Gemäß Figur 1 befindet sich der Reaktordruckbehälter 1 unter der Oberfläche 2 des Kühlwassers im Siedewasserreaktor, während auf einer Brücke oder Rampe 3 eine Lademaschine 4 über dieser Oberfläche verfahrbar ist. Die Lademaschine 4 trägt einen Mast 5 in Form eines teleskopierbaren Armes, an dessen Ende eine Haube 6 angeordnet ist.

Die Brennelemente des Reaktors sitzen im Reaktordruckbehälter auf einem unteren Brennelement-Gitter 8, wobei die Haube 6 in der Arbeitsstellung des Mastes 5 über die Köpfe der Brennelemente 7 einer Abteilung X gestülpt sind, während die anderen Brennelemente 70 einer zweiten Abteilung und anderen Abteilungen zugeteilt sind.

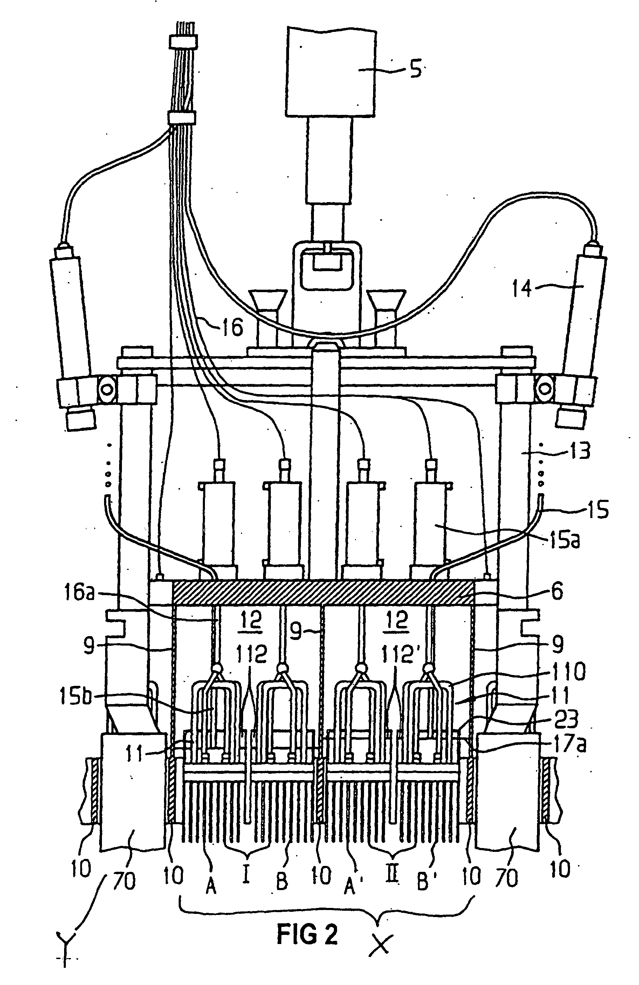

Gemäß Figur 2 ist die Haube durch Seitenwände 9 in einzelne Zellen 12 unterteilt, wobei diese Seitenwände 9 auf den Stegen 10 des oberen Kerngitters ruhen. Jede Masche dieses Kerngitters umfaßt eine Gruppe von jeweils vier Brennelementen, wobei die Haube 6 durch die Seitenwände 9 in vier Zellen unterteilt ist, unter denen sich jeweils eine Gruppe von Brennelementen einer Abteilung X befindet. In Figur 2 sind jeweils nur die ersten Brennelemente A, A' und die zweiten Brennelemente B, B' der Abteilung X gezeigt, die zu der ersten Gruppe I und der zweiten Gruppe II gehören. Die beiden anderen Brennelemente C, D, der ersten Gruppe I bzw. die Brennelemente C', D' der Gruppe II sowie die restlichen Gruppen III und IV der Abteilung X sind nicht erkennbar.

Die Haube 6 ist in einem Rahmen 13 angeordnet, der auf den Köpfen von Brennelementen 70 positioniert ist, die der Abteilung X räumlich benachbart sind. Dieser Rahmen trägt Videokameras 14, die auf das Auslaß-Ende von Füllstandsprüfleitungen 15 gerichtet sind. Diese Füllstandsprüfleitungen sind zunächst als flexible Schläuche zu einem Anschluß an einer Höhenverstelleinrichtung 15a geführt, wobei an diese Anschlüsse Entlüftungsröhrchen 15b angeschlossen sind. Diese Entlüftungsröhrchen 15b sind an Saugröhrchen 16a befestigt, die sich in Form einer zweizinkigen Gabel verzweigen und das Ende von flexiblen Ansaugleitungen 16 bilden, die als Bündel aus dem Wasser herausgeführt sind. Die Füllstandsprüfleitungen 15a sind aus Gründen der Übersichtlichkeit nur für die Brennelemente A und B' in Figur 2 gezeigt, jedoch sind entsprechende Entlüftungsröhrchen auch an den Saugröhrchen angeordnet, die in alle anderen Brennelemente führen.

Von der Höhenverstellung 15a werden die Entlüftungsröhrchen 15b und die Saugröhrchen 16a gemeinsam abgesenkt, bis sie exakt am Kopf des jeweiligen Brennelements positioniert sind.

Diese Positionierung kann z.B. geschehen, indem der Verzweigungspunkt der gabelförmigen Saugröhrchen 16a auf dem Bügel 110 des Brennelement-Kopfes 11 aufsitzt oder die Enden der Saugröhrchen 16a auf der oberen Stabhalteplatte 112 des entsprechenden Brennelements aufsitzen.

Wird nun (z.B. über die Ansaugleitung 16) Gas in die Zellen unter der Haube 6 gepumpt, so sinkt in diesen Zellen der Wasserspiegel 17a solange, bis er die untere Öffnung der Entlüftungsröhrchen 15b erreicht. Das Entlüftungsröhrchen 15b einer Zelle, dessen Ende am höchsten liegt, bestimmt den Wasserspiegel unter dem in dieser Zelle entstehenden Gaspolster, da weiteres Gas dann durch das entsprechende Entlüftungsröhrchen entweicht und am anderen Ende dieser Entlüftungsröhrchen, auf das die Fernsehkamera 14 gerichtet ist, Gasbläschen erzeugt. Durch Justierung der aneinander befestigten Entlüftungsröhrchen und Ansaugröhrchen ist dabei sichergestellt, daß die Ansaugröhrchen stets Wasser unter dem auf diese Weise eingestellten Wasserspiegel ansaugen. Ferner ragt im allgemeinen der Rand 23 des Brennelement-Kastens jedes Brennelements relativ weit nach oben über dessen obere Stabhalteplatte 112. Es ist daher in der Regel möglich, durch Justierung der gegenseitigen Lage der Ansaugröhrchen und Entlüftungsröhrchen sicherzustellen, daß auch bei Brennelementen, die (aufgrund unterschiedlicher Herstellungsmaße oder unterschiedlichen Strahlungswachstums) nicht alle auf dem gleichen Niveau enden, die Brennelement-Kästen einer Gruppe stets etwas über den Wasserspiegel 17a unter dem Gaspolster der entsprechenden Zelle hinausragen. Spaltprodukte, die in das Wasser eines Brennelements eintreten, können also nicht durch das Wasser zum Ansaugröhrchen des anderen Brennelements gelangen. Sie können darüber hinaus auch nicht in das mehreren Brennelementen gemeinsame Gaspolster gelangen, da das Wasser des Brennelements bereits angesaugt wird, während sich der Druckunterschied beim Aufheizen aufbaut und daher allmählich die Spaltprodukte erst aus dem defekten Brennstab ausgetrieben werden.

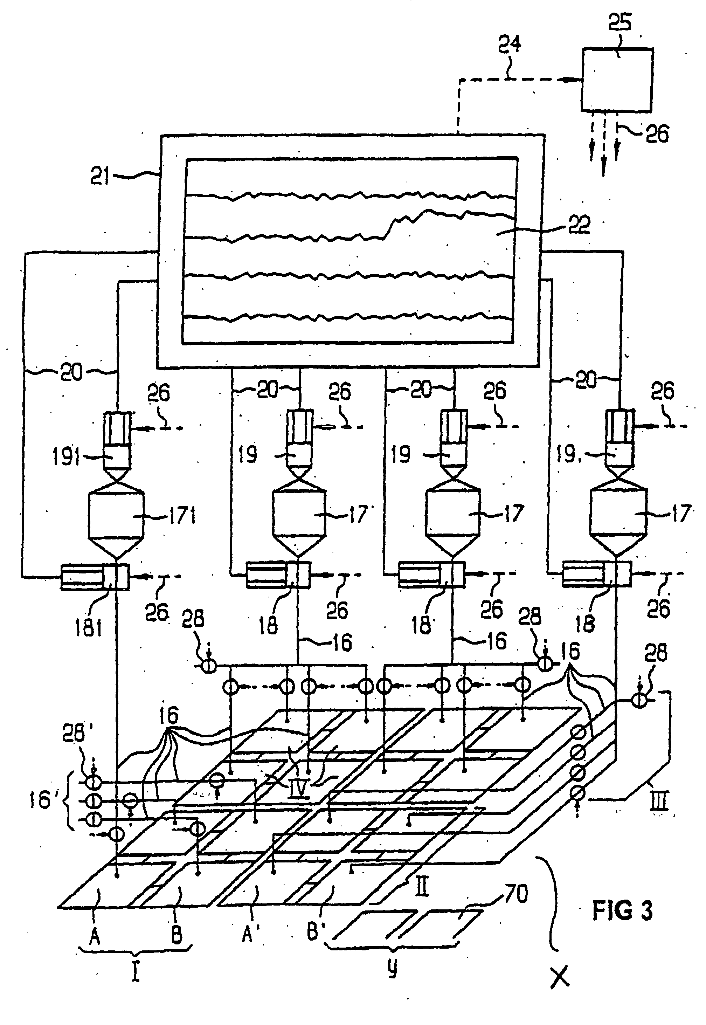

In Figur 3 sind zunächst die bereits in Figur 2 erkennbaren ersten Brennelemente A, A' und zweiten Brennelementen B, B' der Gruppen I und II sowie die beiden restlichen Brennelemente dieser Gruppen und die entsprechenden Brennelemente zweier weiterer Gruppen III, IV der ersten Abteilung X gezeigt. Ferner sind weitere Brennelemente 70 angedeutet, die zu einer anderen, zweiten Abteilung Y gehören. Im übrigen sind in Figur 3 nur die über dem Wasserspiegel des Reaktorbeckens hinausragenden Bauteile der erfindungsgemäßen Vorrichtung gezeigt. Hierzu gehören vier Entgasungseinrichtungen 17, die über eine entsprechende Ansaugeinrichtung 18 an die Ansaugleitungen 16 angeschlossen sind. Die in den Entgasungseinrichtungen 17 freigesetzten Gase werden jeweils von einer Baugruppe 19 entnommen, die eine Gasfördereinrichtung und eine auf die Erfassung von Radioaktivität in Gasen eingerichtete Detektoreinrichtung enthalten. Die Meßsignale der Detektoreinrichtungen werden über Leitungskanäle 20 einem elektronischen Gerät 21 zugeführt, das die Meßwerte auswertet, in Form von Meßkurven auf einem Anzeigeschirm 22 darstellt und über eine Ausgabeleitung 24 einem programmierten Steuergerät 25 eingibt. Von diesem Steuergerät 25 gehen Steuerleitungen 26 ab, mit denen zunächst die Ansaugeinrichtungen 18 sowie die Fördereinrichtungen gesteuert werden, mit denen die Entnahme der in den Entgasungseinrichtungen 17 freigesetzten Gase und die Erfassung der Radioaktivität dieser Gase in den Baugruppen 19 gesteuert werden.

Figur 3 zeigt dabei die Konfiguration, die bei der gruppenweisen Vorprüfung der Brennelemente in der ersten Abteilung X angesteuert wird. Dabei ist in Figur 3 angedeutet, daß sich die Ansaugleitungen 16 jeder Ansaugeinrichtung 18 vielfach verzweigen, wobei sich in jedem Zweig ein Absperrventil 28, 28' befindet, das ebenfalls von den Steuerleitungen 26 der Steuereinrichtung 25 betätigt wird.

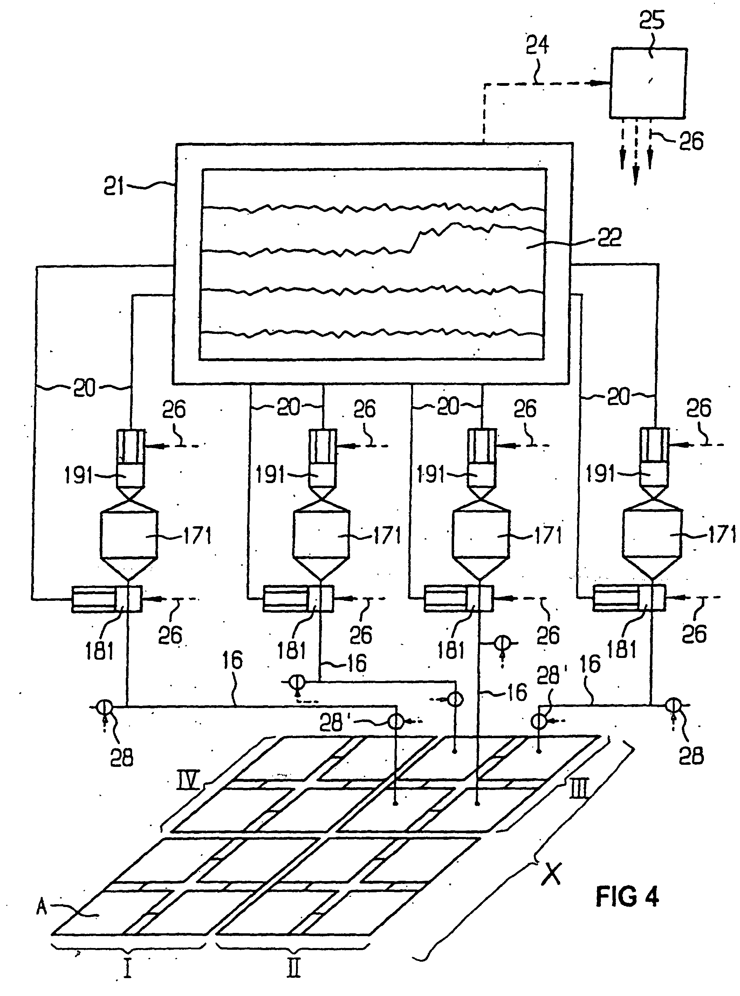

Dabei erkennt man in Figur 3, daß zunächst das Wasser aus dem ersten Brennelement A der Gruppe I zusammen mit dem Wasser aus dem zweiten Brennelement B und den weiteren Brennelementen der Gruppe I über Ansaugleitungen 16 einer der vier Ansaugeinrichtung 18, nämlich der Einrichtung 181 mit Entgasungseinrichtung 171 und Baugruppe 191 (Detektoreinrichtung) zugeführt wird, wobei die Absperrventile 28 in diesen Leitungen auf Durchgang gesteuert (also geöffnet) sind. Weiterhin ist angedeutet, daß dieselbe, mit dem ersten Brennelement A der Gruppe I verbundene Ansaugeinrichtung 18 auch an drei weitere Ansaugleitungen 16' angeschlossen ist, deren Absperrventile 28' sperren. Diese Ansaugleitungen 16' sind vorgesehen, um bei der in Figur 4 gezeigten Anordnung die entsprechende Ansaugeinrichtung jeweils wahlweise auf ein erstes Brennelement einer der anderen Gruppen II, III und IV aufzuschalten.

Wenn nämlich weder die Detektoreinrichtung der Baugruppe 191 und noch eine der anderen Detektoreinrichtungen auf keinem der Kanäle eine signifikante Erhöhung der Radioaktivität zeigt, ist die Prüfung aller Brennelemente der ersten Gruppe I bereits beendet. Dann wird über die Lademaschine die Ansaughaube abgehoben, alle Absperrventile werden von der Steuereihrichtung 25 geöffnet und alle Leitungen werden über die Ansaugeinrichtungen 18 mit Beckenwasser gespült. Sodann kann die Absaughaube auf eine neue Position über einer weiteren Abteilung von Brennelementen positioniert werden und die Prüfung der Brennelemente der neuen Abteilung wird begonnen, indem zunächst über die Ansaugeinrichtungen 18 die Entgasungseinrichtungen 17 mit Frischluft gespült wird und über die Ansaugleitungen 16 zunächst Frischluft unter die auf der neuen Position fixierten Haube gefördert wird.

Wenn aber ein Meßkanal, z.B. für die Gruppe III, eine signifikante Erhöhung der Radioaktivität erfaßt wird, ist in der zu diesem Kanal gehörenden Gruppe ein Brennelement undicht und muß identifiziert werden. Zu diesem Zweck werden nun gemäß Figur 4 die bereits bei der Vorprüfung verwendeten Einrichtungen mittels ihrer Absperrventile 28 und 28' auf andere Weise den Brennelementen zugeordnet.

So wird z.B. die Ansaugeinrichtung 181, die in Figur 3 auf das erste und alle weiteren Brennelemente der ersten Gruppe I aufgeschaltet war, nur dem ersten Brennelement der Gruppe mit der signifikanten Radioaktivität aufgeschaltet, und ebenso jeweils eine der weiteren Ansaugeinrichtungen auf jeweils ein Brennelement dieser signifikanten Gruppe. Auf diese Weise kann durch Ansaugen, Entgasen und Detektieren jedes einzelne Brennelement individuell geprüft werden, wobei die entsprechende Meßkurve im Anzeigegerät 22 nunmehr das defekte Brennelement zu identifizieren gestattet. Die Zuordnung der Ansaugeinrichtungen zu den einzelnen Brennelementen geschieht dabei programmgesteuert über die Steuereinrichtung 25 durch Betätigen der Absperrventile 28.

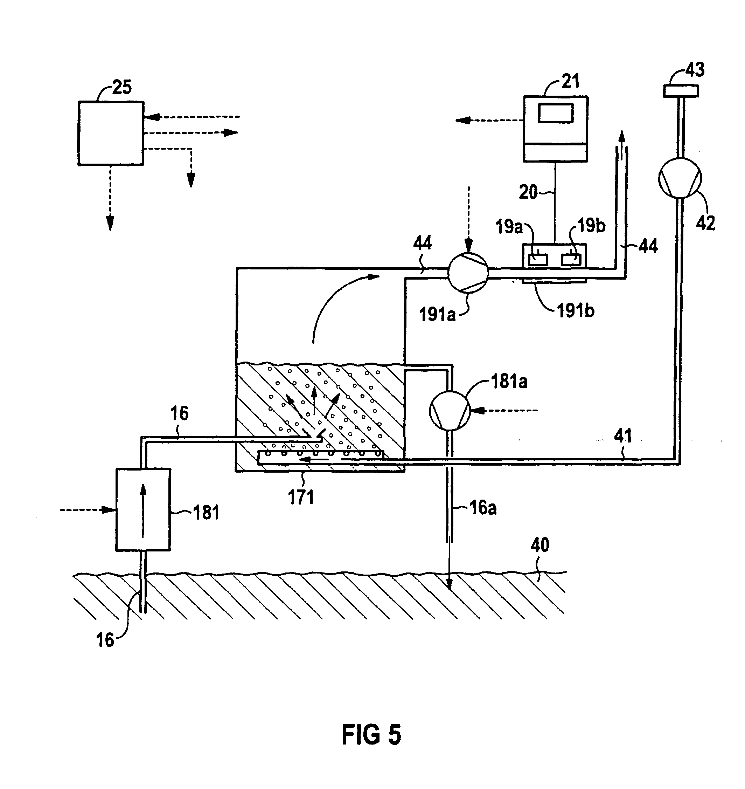

In Figur 5 ist über dem Niveau des Wassers 40, in dem die zu untersuchenden Brennelemente sitzen, zunächst ein Wasserkreislauf erkennbar, der über die Ansaugleitung 16 und die Ansaugleitung 181 einem Auffangbehälter der Entgasungseinrichtung 171 Wasser zuführt, das gemäß den Figuren 3 und 4 unter einer oder mehreren Hauben abgesaugt wird, und das Wasser nach dem Entgasen über eine Überlaufleitung 16a zurückleitet. In den Auffangbehälter der Entgasungseinrichtung 171 mündet eine Leitung 41, mit der, z.B. über eine Pumpe 42 und ein Luftfilter 43, Umgebungsluft angesaugt wird. Ebenso kann aber auch über ein Drosselventil Stickstoff oder irgendein anderes, nicht-radioaktives Gas aus einem Druckbehälter in den Auffangbehälter der Entgasungseinrichtung 71 eingeleitet werden. Dieses Trägergas perlt durch das gesammelte Wasser im Auffangbehälter der Entgasungseinrichtung 171 und sammelt alle Gase, die im angesaugten Wasser gelöst sind und freigesetzt werden. Das Freisetzen dieser Gase wird in diesem Beispiel durch eine Pumpe 191a erleichtert, die, zusammen mit einer entsprechenden Ablaufpumpe 181a einen Unterdruck im Auffangbehälter erzeugt. Die hier dargestellten Pumpen, Kompressoren und ähnlichen Fördereinrichtungen 181, 181a, 191a und 42 sind von der Steuereinrichtung 25 synchron mit der Auswerteeinrichtung 21 einer Detektoranordnung 191b gesteuert und hier nur symbolisch dargestellt für entsprechende Mittel, die der Fachmann jederzeit vorsehen wird, um sicherzustellen, daß während der Überprüfung eines Brennelements im Auffangbehälter 171 geeignete Druckverhältnisse zum Ansaugen des Wassers aus dem Brennelement und zum Transport der freigesetzten und mit dem Trägergas gemischten Spaltprodukte gewährleistet ist.

Die Detektoreinrichtung 191b enthält im dargestellten Fall einen β-Zähler 19a und einen γ-Zähler 19b, deren Empfindlichkeitsspektrum besonders dem Energiespektrum der am häufigsten anfallenden Spaltprodukte angepaßt ist. Zahl und Art der Detektoren wählt der Fachmann entsprechend denjenigen Isotopen, deren Entstehung im Inneren der Brennstäbe in erster Linie zu erwartet ist.

Die Entsorgungsleitung 44 verbindet einerseits den Eingang der Detektoranordnung 191b mit einem Ausgang der Entgasungseinrichtung 171, und andererseits den Ausgang dieser Detektoranordnung 191b mit einem Abluftkanal des Kernkraftwerks.

Vor der Untersuchung von Wasserproben aus Brennelementen wird die Anordnung mit Wasser gespült, das zwar aus dem gleichen Becken stammt, aber nicht unter einer Haube abgezogen wird, die bereits über ein in der Aufheizphase befindlichen Brennelement gestülpt ist. Zu diesem Zeitpunkt werden in dem angesaugten Wasser also nur Spaltprodukte freigesetzt, die sich bereits ohnehin im Wasser befinden und einen konstanten "radioaktiven Hintergrund" für die nachfolgende Messung bilden. Wird nun ein Brennelement aufgeheizt, das unter der an die Leitung 16 angeschlossenen Haube sitzt, und steigt die in der Detektoranordnung erfaßte Radioaktivität an, so ist der Anstieg auf den Austritt von Spaltprodukten aus dem in der Aufheizphase befindlichen Brennelement zurückzuführen, und die Meßwerte steigen in dem Maße an, in dem der Austritt der Spaltgase zunimmt. Dadurch werden Defekte in den Hüllen der Brennstäbe frühzeitig erkannt und es kann bereits frühzeitig auf die Messung weiterer Brennelemente übergegangen werden.

Die Erfindung ist nicht auf Siedewasser-Brennelemente und Positionen im Reaktordruckbehälter beschränkt. Vielmehr kann die Funktion des Brennelement-Kastens eines solchen Elements auch von anderen Behältern oder z.B. von entsprechenden Schächten eines Lagergestells für Druckwasser-Brennelemente übernommen werden.

## Patentansprüche

1. Verfahren zum Prüfen von auf einer Arbeitsunterlage (8) und unter Wasser ruhenden Brennelementen (A, B, A', B') eines Kernreaktors auf Dichtheit ihrer Brennstäbe, wobei diese Brennelemente durch eine unter einer Haube gehaltenen, den Kopf eines Brennelements umgebende Gasfüllung aufgeheizt werden, um radioaktive Spaltprodukte aus defekten Brennstäben auszutreiben, und in aus der Umgebung der Brennelemente abgesaugten Proben die Radioaktivität von ausgetriebenen Spaltprodukten erfasst wird,
- dass alle Brennelemente (A, A', B, B' ...) einer ersten Abteilung (X)aufgeheizt werden, indem über sie eine gemeinsame Haube (6)gestülpt wird, wobei die erste Abteilung (X) mindestens eine erste und eine zweite Gruppe (I, II) mit jeweils mehreren Brennelementen (A, B, A', B') umfasst und jede Gruppe (I, II) ein erstes (A, A') und ein zweites Brennelement (B, B') enthält, **dadurch gekennzeichnet,**
- **daß** in einem ersten Schritt die Brennelemente der ersten Gruppe (I), der zweiten Gruppe (II) bzw. jeder weiteren Gruppe gemeinsam aufgeheizt und einer gemeinsamen Vorprüfung simultan unterzogen werden, indem Wasser aus den Brennelementen einer Gruppe (I, II, II, IV) kontinuierlich als Probe abgesaugt und jeweils nur einer eigenen Einrichtung zum Ansaugen (181), Entgasen (171) und Erfassen der Radioaktivität (191) zugeführt und kontinuierlich entgast wird, wobei im dabei kontinuierlich freigesetzten Gas die Radioaktivität freigesetzter gasförmiger Spaltprodukte kontinuierlich erfasst wird,
- **daß** in einem zweiten Schritt in einer Gruppe (II), bei deren Vorprüfung eine signifikant erhöhte Radioaktivität erfasst wurde, eine individuelle Prüfung jedes einzelnen Brennelements (A', B') dieser Gruppe (II) mittels jeweils einer eigenen Einrichtung zum Ansaugen (18), Entgasen (17) und Erfassen der Radioaktivität (19) simultan vorgenommen wird, wobei Einrichtungen zum Ansaugen (18), Entgasen (17) und Erfassen (19) der Radioaktivität, die für die individuelle Prüfung einzelner Brennelemente (A', B') vorgesehen sind, bereits benutzt wurden, um jeweils die Brennelemente (A, B) einer Gruppe (I) einer gemeinsamen Vorprüfung zu unterwerfen,
- und **daß** erst dann ein Brennelement (70) einer anderen Abteilung (Y) von Brennelementen aufgeheizt wird, wenn dieses erste Brennelement (A) der ersten Abteilung (X) geprüft ist.

2. Verfahren nach Anspruch 1, **dadurch gekennzeichnet, dass** bereits während des Aufheizens kontinuierlich Wasser als Probe aus den Brennelementen abgesaugt und kontinuierlich entgast wird und im dabei kontinuierlich freigesetzten Gas die Radioaktivität freigesetzter gasförmiger Spaltprodukte kontinuierlich erfasst wird.

3. Verfahren nach Anspruch 1 oder 2, **dadurch gekennzeichnet, dass** das kontinuierlich freigesetzte Gas nach dem Erfassen der Radioaktivität entsorgt wird und dass die Radioaktivität in einer Detektoranordnung erfasst wird, durch die es vor dem Entsorgen nur ein einziges Mal hindurchgeleitet wird.

4. Verfahren nach Anspruch 3, **dadurch gekennzeichnet, daß** nach dem Absaugen des Wassers durch das abgesaugte Wasser ein Trägergas geleitet wird und dass das Trägergas zusammen mit den freigesetzten gasförmigen Spaltprodukten durch die Detektoranordnung geleitet wird.

5. Verfahren nach einem der Ansprüche 1 bis 4, **dadurch gekennzeichnet, daß** mindestens ein erstes Brennelement (A) der ersten Abteilung (X) unter einer über mehrere Brennelemente der ersten Abteilung gestülpten Haube (6), die eine den Kopf (11) des ersten Brennelements (A) umgebende Gasfüllung enthält, maximal um eine vorgegebene Temperaturdifferenz aufgeheizt wird.

6. Verfahren nach Anspruch 5, **dadurch gekennzeichnet, daß** solange Gas unter die Haube (6) geleitet wird, bis eine aus der Haube herausführende Füllstandsprüfleitung (15) eine vorgegebene Höhe des Wasserspiegels (17a) unter der Haube (6) anzeigt.

7. Verfahren nach einem der vorhergehenden Ansprüche, **dadurch gekennzeichnet, daß** die Haube (6) durch Querwände (9) in einzelne Zellen unterteilt ist, aus denen jeweils eine individuell höhenverstellbare Füllstandsprüfleitung (15) nach außen führt, und daß in alle Zellen Gas geleitet wird, bis die Füllstandsprüfleitungen (15) Gas enthalten.

8. Verfahren nach einem der vorhergehenden Ansprüche, **dadurch gekennzeichnet, dass** Aufheizen und Prüfen automatisch von einem Prüfprogramm gesteuert werden.

9. Verfahren nach einem der vorhergehenden Ansprüche, **dadurch gekennzeichnet, daß** die Brennelemente einer Gruppe unter der gemeinsamen Haube (6) aufgeheizt werden, indem Gas in Zellen (12) geleitet wird, die durch Seitenwände (9) über den Brennelementen (A, B, A', B') gebildet sind, und daß die Haube (6) erst von den Brennelementen abgehoben wird, wenn die Brennelemente geprüft sind.

10. Verfahren nach Anspruch 9, **dadurch gekennzeichnet, dass** solange Gas in die Zellen (12) geleitet wird, bis aus den Zellen herausführende Füllstandsprüfleitungen (15) eine vorgegebene Höhe des Wasserspiegels (17a) in den Zellen (12) anzeigen.

11. Verfahren nach Anspruch 10, **dadurch gekennzeichnet, daß** die Füllstandsprütleitungen (15) in den Zellen (12) entsprechend der vorgegebenen Höhe des Wasserspiegels (17a) in jeder Zelle (12) individuell höhenverstellt werden und solange Gas eingeleitet wird, bis die Zellen jeweils über ihre Füllstandsprüfleitungen (15) entlüftet werden.

12. Vorrichtung zum Prüfen von auf einer Arbeitsunterlage (8) und unter Wasser ruhenden Brennelementen (A, A', B, B') eines Kernreaktors, mit einer Haube (6), die sich mit einer nach unten weisenden Öffnung über die Köpfe (11) mehrerer Brennelemente (A) stülpen läset, einer Einrichtung (181) zum Einleiten von Gas in die Haube (6) sowie Einrichtungen (181, 191) zum Ansaugen einer Wasserprobe und zum Erfassen der Radioaktivität eines in der Wasserprobe enthaltenen Gases **dadurch gekennzeichnet,**
- **daß** die Haube (6) durch Seitenwände (9) in einzelne, jeweils eine Gruppe von mehreren Brennelementen überdeckenden Zellen (12) unterteilt ist,
- und **dass** die Anzahl der Einrichtungen (181, 191) zum Ansaugen einer Waseerprobe und zur Erfassung der Radioaktivität gleich der Anzahl der Zellen (12) und gleich der Anzahl der unter einer Zelle (12) Platz findenden Brennelemente ist, und wobei mindestens einige der Ansaugeinrichtungen (181) von den Ansaugleitungen (16) einzelner Brennelemente (A, B) einer Gruppe (I) auf die Ansaugleitungen einzelner Brennelemente (A', B') einer anderen Gruppe (II) und auf eine Vereinigung der Ansaugleitungen einer Gruppe (I) umschaltbar sind,
- **dass** die Vorrichtung eine Einrichtung (17) zum kontinuierlichen Entgasen des Wassers enthält, die mit der Einrichtung (181) zum kontinuierlichen Absaugen verbundenen ist,
- **daß** der Einrichtung (19) zum Erfassen der Radioaktivität eines Gases das in der Entgasungseinrichtung (17) freisetzbare Gas kontinuierlich zuführbar ist,
- **daß** über die Einrichtung (19) zur Erfassung der Radioaktivität diese Radioaktivität kontinuierlich ermittelbar ist und daß die Einrichtungen (17, 18, 19) zum Absauen, Entgasen und Erfassen der Radioaktivität vom Programm einer Steuereinrichtung (25) steuerbar sind.

13. Vorrichtung nach Anspruch 12, **dadurch gekennzeichnet, daß** die Einrichtung (19) zum Erfassen der Radioaktivität eines Gases in einer an die Entgasungseinrichtung (17) angeschlossenen Entsorgungsleitung angeordnet und während des kontinuierlichen Absaugens des Wassers nur über die Entsorgungsleitung mit der Entgasungseinrichtung (17) verbindbar ist.

14. Vorrichtung nach Anspruch 12 oder 13, **dadurch gekennzeichnet, daß** in der Entgasungseinrichtung (17) ein Trägergas in das abgesaugte Wasser einleitbar ist.

15. Vorrichtung nach einem der Ansprüche 12 bis 14, **dadurch gekennzeichnet, daß** die Haube (6) durch Querwände (9) in einzelne Zellen (12) eingeteilt ist, die jeweils eine eigene, höhenverstellbare Füllstandsprüfleitung (15) aufweisen und über diese Füllstandsprüfleitung entlüftbar sind.

16. Vorrichtung nach Anspruch 15, **dadurch gekennzeichnet, daß** mindestens die Füllstandeprüfleitungen (15) mittels Videokameras (14) beobachtbar sind

17. Vorrichtung nach einem der Ansprüche 12 bis 16, **dadurch gekennzeichnet, daß** die Haube (6) durch Querwände (9) in einzelne Zellen (12) eingeteilt ist, die jeweils über dem Kopf (11) einer Gruppe (I) von Brennelementen (A, B) positionierbar und die jeweils getrennt an eine Einrichtung zum Ansaugen (18) und Entgasen (17) anschließbar sind, und daß Ansauganschlüsse (16a) für jedes Brennelement vorgesehen sind.

18. Vorrichtung nach Anspruch 17, **gekennzeichnet durch** mehrere Einrichtungen (19) zum Erfassen der Radioaktivität mehrerer Gase aus unterschiedlichen Entgasungseinrichtungen (17, 171).

19. Vorrichtung nach Anspruch 18, **dadurch gekennzeichnet, daß** die Zellen (12) jeweils die gleiche Anzahl von Brennelementen (A, B, C, D) in jeder Gruppe (I, II) umfassen.

20. Vorrichtung nach einem der Ansprüche 12 bis 19, **dadurch gekennzeichnet, daß** für jedes Brennelement (A, A', B, B') unter der Haube (6) eine Ansaugleitung (16) vorgesehen ist, deren eines Ende (16a) in einer vorgegebenen Lage unterhalb einer aus der Haube (6) herausführenden Entlüftungsleitung (15a) am Kopf (11) und über den Brennstäben des Brennelements (A) positionierbar ist.

## Claims

1. Method for testing whether the fuel rods of fuel elements (A, B, A', B'), which rest on a working base (8) and under water, of a nuclear reactor are leaking, in which these fuel elements are heated by a gas fill held beneath a hood and surrounding the top fitting of a fuel element in order to drive radioactive fission products out of defective fuel rods, and the radioactivity: of fission products which have been driven out is recorded in samples which have been extracted from the environment of the fuel elements,
- in that all the fuel elements (A, A', B, B' ...) of a first division (X) are heated by a common hood (6) being fitted over them, the first division (X) comprising at least a first group (I) and a second group (II), each having a plurality of fuel elements (A, B, A', B'), and each group (I, II) containing a first fuel element (A, A') and a second fuel element (B, B'), **characterized**
- **in that** in a first step the fuel element belonging to the first group (I), to the second group (II) and any further group are heated together and are simultaneously subjected to a common preliminary test, in which water is continuously extracted from the fuel elements belonging to a group (I, II, II, IV) as a sample, and is in each case fed to just one dedicated device for extraction (181), degassing (171) and recording of the radioactivity (191) and is continuously degassed, the radioactivity of gaseous fission products which are released in the gas which is continuously released being recorded continuously,
- **in that** in a second step, in a group (II) whose preliminary test has recorded a significantly increased radioactivity, an individual test of each individual fuel element (A', B') belonging to this group (II) is carried out simultaneously by means of in each case a dedicated device for extraction (18), degassing (17) and recording of the radioactivity (19), devices for extraction (18), degassing (17) and recording (19) of the radioactivity which are provided for the individual testing of individual fuel elements (A', B') already being in use for subjecting in each case the fuel elements (A, B) belonging to one group (I) to a common preliminary test,
- and **in that** a fuel element (70) belonging to another division (Y) of fuel elements is only heated when this first fuel element (A) belonging to the first division (X) has been tested.

2. Method according to Claim 1, **characterized in that** even during heating water is continuously extracted from the fuel elements as a sample and continuously degassed, and the radioactivity of gaseous fission products released is recorded continuously in the gas which is continuously released in the process.

3. Method according to Claim 1 or 2, **characterized in that** the gas which is continuously released is disposed of after the radioactivity has been recorded, and **in that** the radioactivity is recorded in a detector arrangement through which it is passed only a single time before being disposed of.

4. Method according to Claim 3, **characterized in that** after the water has been extracted, a carrier gas is passed through the extracted water, and **in that** the carrier gas is passed through the detector arrangement together with the gaseous fission products which have been released.

5. Method according to one of Claims 1 to 4, **characterized in that** at least one first fuel element (A) belonging to the first division (X) is heated by at most a predetermined temperature difference beneath a hood (6) which is fitted over a plurality of fuel elements belonging to the first division and contains a gas fill which surrounds the top fitting (11) of the first fuel element (A).

6. Method according to Claim 5, **characterized in that** gas is passed under the hood (6) until a filling-level test line (15), which leads out of the hood, indicates a predetermined height of the water level (17a) beneath the hood (6).

7. Method according to one of the preceding claims, **characterized in that** the hood (6) is divided into individual cells by transverse walls (9), and a filling-level test line (15), the height of which can be adjusted individually, leads outwards from each of the cells, and **in that** gas is passed into all the cells until the filling-level test lines (15) contain gas.

8. Method according to one of the preceding claims, **characterized in that** the heating and testing are controlled automatically by a test program.

9. Method according to one of the preceding claims, **characterized in that** the fuel elements belonging to one group are heated under the common hood (6), as a result of gas being passed into cells (12) which are formed above the fuel elements (A, B, A', B') by side walls (9), and **in that** the hood (6) is only lifted off the fuel elements when the fuel elements have been tested.

10. Method according to Claim 9, **characterized in that** gas is passed into the cells (12) until filling-level test lines (15) which lead out of the cells indicate a predetermined height of the water level (17a) in the cells (12).

11. Method according to Claim 10, **characterized in that** the filling-level test lines (15) are individually height-adjusted in the cells (12) in accordance with the predetermined height of the water level (17a) in each cell (12), and gas is introduced until the cells have each been vented via their filling-level test lines (15).

12. Apparatus for testing fuel elements (A, A', B, B'), which rest on a working base (8) and under water, of a nuclear reactor, having a hood (6), a downwardly facing opening of which can be fitted over the top fittings (11) of a plurality of fuel elements (A), a device (181) for introducing gas into the hood (6), and devices (181, 191) for extracting a water sample and for recording the radioactivity of a gas contained in the water sample, **characterized**
- **in that** the hood (6) is divided by side walls (9) into individual cells (12) which each cover a group of a plurality of fuel elements,
- and **in that** the number of devices (181, 191) for extracting a water sample and for recording the radioactivity is equal to the number of cells (12) and equal to the number of fuel elements accommodated beneath a cell (12), it being possible for at least some of the extraction devices (181) to be switched over from the extraction lines (16) of individual fuel elements (A, B) belonging to one group (I) to the extraction lines of individual fuel elements (A', B') belonging to another group (II) and to a combination of the extraction lines belonging to one group (I),
- **in that** the apparatus includes a device (17) for continuously degassing the water, which device is connected to the continuous extraction device (181),
- **in that** the gas which can be released in the degassing device (17) can be fed continuously to the device (19) for recording the radioactivity of a gas,
- **in that** the device (19) for recording the radioactivity can be used to continuously determine this radioactivity, and in that the devices (17, 18, 19) for extracting, degassing and recording the radioactivity can be controlled by the program of a control device (25).

13. Apparatus according to Claim 12, **characterized in that** the device (19) for recording the radioactivity of a gas is arranged in a disposal line connected to the degassing device (17) and during the continuous extraction of the water can only be connected to the degassing device (17) via the disposal line.

14. Apparatus according to Claim 12 or 13, **characterized in that** a carrier gas can be introduced into the extracted water in the degassing device (17).

15. Apparatus according to one of Claims 12 to 14, **characterized in that** the hood (6) is divided by transverse walls (9) into individual, cells (12) which each have a dedicated, height-adjustable filling-level test line (15) and can be vented via this filling-level test line.

16. Apparatus according to Claim 15, **characterized in that** at least the filling-level test lines (15) can be observed by means of video cameras (14).

17. Apparatus according to one of Claims 12 to 16, **characterized in that** the hood (6) is divided by transverse walls (9) into individual cells (12) which can each be positioned above the top fitting (11) of a group (I) of fuel elements (A, B) and which can each be separately connected to a device for extraction (18) and degassing (17), and **in that** extraction connections (16a) are provided for each fuel element.

18. Apparatus according to Claim 17, **characterized by** a plurality of devices (19) for recording the radioactivity of a plurality of gases from different degassing devices (17, 171).

19. Apparatus according to Claim 18, **characterized in that** the cells (12) each comprise the same number of fuel elements (A, B, C, D) in each group (I, II).

20. Apparatus according to one of Claims 12 to 19, **characterized in that** for each fuel element (A, A', B, B') an extraction line (16) is provided beneath the hood (6), one end (16a) of which line can be positioned in a predetermined position beneath a vent line (15a), which leads out of the hood (6), on the top fitting (11) and over the fuel rods of the fuel element (A).

## Revendications

1. Procédé de contrôle de l'étanchéité de crayons combustibles d'assemblages combustibles (A, B, A', B'), reposant sous l'eau sur un support (8) de travail, d'un réacteur nucléaire, ces assemblages combustibles étant chauffés par une atmosphère gazeuse maintenue sous une hotte et entourant la tête d'un assemblage combustible pour extraire des produits radioactifs de fission de crayons combustibles défectueux et pour détecter, dans des échantillons aspirés alentour des assemblages combustibles, la radioactivité de produits de fission extraits,
- dans lequel on chauffe tous les assemblages combustibles (A, B, A', B'...) d'une première division (X) en les coiffant d'une hotte (6) commune, la première division (X) comprenant au moins un premier et un deuxième groupe (I, II) ayant chacun plusieurs assemblages combustibles (A, B, A', B') et chaque groupe (I, II) contenant un premier assemblage combustible (A, A') et un deuxième assemblage combustible (B, B'), **caractérisé**
- **en ce que**, dans un premier stade, on chauffe conjointement les assemblages combustibles du premier groupe (I), du deuxième groupe (II) ainsi que de tout autre groupe et on les soumet simultanément à un pré-contrôle commun en aspirant de l'eau des assemblages combustibles d'un groupe (I, II, II, IV) continuellement en tant qu'échantillon et en l'envoyant respectivement seulement à un dispositif propre d'aspiration (181), de dégazage (171) et de relevé de la radioactivité (191), en relevant en continu dans le gaz dégagé en continu la radioactivité des produits gazeux de fission dégagés,
- **en ce que**, dans un deuxième stade, on effectue simultanément, dans un groupe (II) dans lequel on a relevé lors du pré-contrôle une radioactivité augmentée significativement, un contrôle individuel de chaque assemblage combustible (A', B') de ce groupe (II) au moyen de respectivement un dispositif propre d'aspiration (18), de dégazage (17) et de relevé de la radioactivité (19), en utilisant des dispositifs d'aspiration (18), de dégazage (17) et de relevé (19) de la radioactivité, qui sont déjà prévus pour le contrôle individuel d'assemblages combustibles (A', B'), afin de soumettre à un pré-contrôle commun respectivement les assemblages combustibles (A, B) d'un groupe (I),
- et **en ce que** l'on ne chauffe un assemblage combustible (70) d'une autre division (Y) d'assemblages combustibles que lorsque ce premier assemblage combustible (A) de la première division (X) à passé le contrôle.

2. Procédé suivant la revendication 1, **caractérisé en ce que**, pendant le chauffage, on aspire en continu de l'eau en tant qu'échantillon des assemblages combustibles et on la dégaze en continu et on relève en continu dans le gaz qui se dégage en continu la radioactivité de produits gazeux de fission dégagés.

3. Procédé suivant la revendication 1 ou 2, **caractérisé en ce que** l'on évacue du gaz dégagé en continu après avoir relevé la radioactivité et **en ce que** l'on relève la radioactivité dans un dispositif à détecteur dans lequel, le gaz ne passe qu'une seule fois avant de l'évacuer.

4. Procédé suivant la revendication 3, **caractérisé en ce qu'**après l'aspiration de l'eau on envoie dans l'eau aspirée un gaz porteur et **en ce que** l'on fait passer le gaz porteur ensemble avec les produits gazeux de fission dégagés dans le dispositif à détecteur.

5. Procédé suivant l'une des revendications 1 à 4, **caractérisé en ce que** l'on chauffe, au maximum d'une différence de température donnée à l'avance, au moins un premier assemblage combustible (A) de la première division (X) sous une hotte (6) coiffant plusieurs assemblages combustibles de la première division, hotte qui contient une atmosphère gazeuse entourant la tête (11) du premier assemblage combustible (A).

6. Procédé suivant la revendication 5, **caractérisé en ce que** l'on envoie du gaz sous la hotte (6) jusqu'à ce que le conduit (15) de contrôle de niveau sortant de la hotte indique une hauteur donnée à l'avance du niveau d'eau (17a) sous la hotte (6).

7. Procédé suivant l'une des revendications précédentes, **caractérisé en ce que** l'on subdivise la hotte (6) par des cloisons (9) transversales en des cellules desquelles part vers l'extérieur respectivement un conduit (15) de contrôle du niveau, qui peut être réglé en hauteur individuellement et **en ce que** l'on envoie du gaz dans toutes les cellules jusqu'à ce que les conduits (15) de contrôle de niveau contiennent du gaz.

8. Procédé suivant l'une des revendications précédentes, **caractérisé en ce que** l'on commande le chauffage et le contrôle automatiquement par un programme de contrôle.

9. Procédé suivant l'une des revendications précédentes, **caractérisé en ce que** l'on chauffe les assemblages combustibles d'un groupe sous la hotte (6) commune, en envoyant du gaz dans des cellules (12) qui sont formées par des cloisons (9) latérales au-dessus des assemblages combustibles (A, B, A', B') et **en ce que** l'on ne retire la hotte (6) des assemblages combustibles que lorsque les assemblages combustibles ont passé le contrôle.

10. Procédé suivant la revendication 9, **caractérisé en ce que** l'on envoie du gaz dans les cellules (12) jusqu'à ce que des conduits (15) de contrôle de niveau sortant des cellules indiquent une hauteur donnée à l'avance du niveau d'eau (17a) dans les cellules (12).

11. Procédé suivant la revendication 10, **caractérisé en ce que** l'on règle en hauteur individuellement les conduits (15) de contrôle de niveau dans les cellules (12) en fonction de la hauteur donnée à l'avance du niveau d'eau (17a) dans chaque cellule (12) et on envoie du gaz jusqu'à ce que les cellules soient purgées respectivement par leur conduit (15) de contrôle de niveau.

12. Dispositif de contrôle d'assemblages combustibles (A, A', B, B') d'un réacteur nucléaire, qui reposent sous l'eau sur un support (8) de travail, comprenant une hotte (6) qui peut coiffer par une ouverture s'évasant vers le bas les têtes (11) de plusieurs assemblages combustibles (A), un dispositif (181) d'envoi de gaz dans la hotte (6) ainsi que des dispositifs (181, 191) d'aspiration d'un échantillon d'eau et de relevé de la radioactivité d'un gaz contenu dans l'échantillon d'eau, **caractérisé**
- **en ce que** la hotte (6) est subdivisée par des cloisons (9) latérales en des cellules (12) recouvrant respectivement un groupe de plusieurs assemblages combustibles,
- et **en ce que** le nombre des dispositifs (181, 191) d'aspiration d'un échantillon d'eau et de relevé de la radioactivité est égal au nombre des cellules (12) et égal au nombre des assemblages combustibles trouvant place sous une cellule (12), et au moins certains des dispositifs (181) d'aspiration peuvent être commutés des conduits (16) d'aspiration d'assemblages combustibles (A, B) d'un groupe (I) aux conduits d'aspiration d'assemblages combustibles (A', B') d'un autre groupe (II) et à une réunion des conduits d'aspiration d'un groupe (I),
- **en ce que** le dispositif comporte un dispositif (17) de dégazage en continu de l'eau, qui communique avec le dispositif (181) d'aspiration en continu,
- **en ce qu'**il peut être envoyé au dispositif (19) de relevé de la radioactivité d'un gaz en continu le gaz qui peut être dégagé dans le dispositif (17) de dégazage,
- **en ce qu'**il peut être déterminé en continu par la dispositif (19) de relevé de la radioactivité cette radioactivité et en ce que les dispositifs (17, 18, 19) d'aspiration de dégazage et de relevé de la radioactivité peuvent être commandés par le programme d'un dispositif (25) de commande.

13. Dispositif suivant la revendication 12, **caractérisé en ce que** le dispositif (19) de relevé de la radioactivité d'un gaz est monté dans un conduit d'évacuation raccordé au dispositif (17) de dégazage et peut communiquer pendant l'aspiration en continue de l'eau avec le dispositif (17) de dégazage seulement par le conduit de purge.

14. Dispositif suivant la revendication 12 ou 13, **caractérisé en ce que** dans le dispositif (17) de dégazage un gaz porteur peut être introduit dans l'eau aspirée.

15. Dispositif suivant l'une des revendications 12 à 14, **caractérisé en ce que** la hotte (6) est subdivisée par des cloisons (9) transversales en des cellules qui ont respectivement leur propre conduit (15) de contrôle de niveau réglable en hauteur et qui peuvent être purgées par ce conduit de contrôle de niveau.

16. Dispositif suivant la revendication 15, **caractérisé en ce que** au moins les conduits (15) de contrôle de niveau peuvent être observés au moyen de caméras (14) vidéo.

17. Dispositif suivant l'une des revendications 12 à 16, **caractérisé en ce que** la hotte (6) est subdivisée par des cloisons (9) transversales en des cellules (12) qui peuvent être mises en position respectivement au-dessus de la tête (11) d'un groupe (I) d'assemblages combustibles (A, B) et qui peuvent être raccordées respectivement de manière séparées à un dispositif d'aspiration (18) et de dégazage (17) et **en ce qu'**il est prévu des raccords (16a) d'aspiration pour chaque assemblage combustible.

18. Dispositif suivant la revendication 17, **caractérisé par** plusieurs dispositifs (19) de relevé de la radioactivité de plusieurs gaz provenant de dispositifs (17, 171) de dégazage, qui sont différents.

19. Dispositif suivant la revendication 18, **caractérisé en ce que** les cellules (12) comprennent respectivement le même nombre d'assemblages combustibles (A, B, C, D) dans chaque groupe (I, II).

20. Dispositif suivant l'une des revendications 12 à 19, **caractérisé en ce qu'**il est prévu pour chaque assemblage combustible (A, A', B, B') sous la hotte (6) un conduit (16) d'aspiration, dont une extrémité (16a) peut être mise sur la tête (11) et au-dessus des crayons combustibles de l'assemblage combustible (A) en une position donnée à l'avance en dessous d'un conduit (15a) de purge sortant de la hotte (6).
